# EUROPÄISCHE PATENTSCHRIFT

(11) **EP 3 023 456 B1**
(45) Veröffentlichungstag und Bekanntmachung des Hinweises auf die Patenterteilung: **19.06.2019**
(21) Anmeldenummer: 14193685.6
(22) Anmeldetag: 18.11.2014
(51) Int. Cl.: C08G 73/14, C08K 3/04, C08K 3/22, C08K 3/24, C08K 9/00, C08L 79/08, F16C 17/02, F16C 33/00, F16C 33/10, F16C 33/20, C08K 3/30

(54) **Gleitlagerelement**
Sliding bearing element
Élément de palier lisse

(43) Veröffentlichungstag der Anmeldung: 25.05.2016
(73) Patentinhaber: Miba Gleitlager Austria GmbH, 4663 Laakirchen (AT)
(72) Erfinder: Leonardelli, Georg, 4810 Gmunden (AT)
(74) Vertreter: Burger, Hannes

(56) Entgegenhaltungen:
- EP-A1- 2 532 905
- EP-A2- 2 048 391
- GB-A- 2 310 691

## Beschreibung

Die Erfindung betrifft ein Gleitlagerelement in Form eine Halbschale oder eine Drittelschale umfassend einen Stützkörper und eine Polymerschicht, wobei die Polymerschicht Festschmierstoffpartikel und Metalloxidpartikel und als Polymer ausschließlich ein Polyimidpolymer oder ein Polyamidimidpolymer oder eine Mischung daraus aufweist. und die Metalloxidpartikel ausgewählt sind aus einer Gruppe umfassend Bismutvanadate, Chrom-Antimon-Rutile und Mischungen daraus.

Die Verwendung von polymerbasierten Schichten in Gleitlagerungen ist aus dem Stand der Technik hinlänglich bekannt. Beispielsweise ist aus der auf die Anmelderin zurückgehenden Druckschrift EP 1 717 469 A2 ein Lagerelement bekannt, das einen metallischen Stützkörper, einer darüber angeordneten Lagermetallschicht sowie eine über dieser angeordneten Polymerschicht aufweist. Die Polymerschicht besteht aus einem Polyimidharz, Molybdändisulfid und Graphit.

Obwohl sich diese Polymerschicht in der Praxis bewährt hat, besteht bei hochbelasteten Gleitlagern der Bedarf von höheren Festigkeiten der Polymerschicht. Zur Stärkung der Polymermatrix ist es bekannt, der Polymerschicht typische Hartstoffpartikel, wie z.B. Keramikpartikel, beispielsweise Al₂O₃, zuzusetzen.

Für besonders kritische Anwendungen im Bereich der Gleitlagerungen ist aus der DE 10 2010 018 328 A1 eine Einlaufschicht mit verbesserter Verschleißfestigkeit bekannt. Diese Einlaufschicht ist wirksam, bis die Plateaus der dreidimensionalen, unter der Einlaufschicht liegenden Gleitschicht den Gleitpartner tragen. Die Einlaufschicht besteht aus einem Fluorpolymer, dem 5-25 Vol.-% hexagonales Bornitrid und 1-15 Vol.-% Mischphasenoxidpigmente beigemengt sind, um die tribologischen Eigenschaften zu verbessern. Diese Polymerschicht ist in die Poren der Gleitschicht einimprägniert. Laut Beschreibung dieser DE-A1 wird durch die Zugabe von Mischphasenoxidpigmenten zu einer hexagonales Bornitrid enthaltenden Fluorpolymermatrix eine wesentliche Reduzierung des bei der Kunststoffgleitschicht auftretenden Verschleißes des Gleitlagerverbundwerkstoffs bzw. eines hieraus hergestellten Gleitlagers erreicht, ohne dass dies mit einem Anstieg des Reibwerts verbunden ist. Als Mischphasenoxidpigmente werden insbesondere solche mit Kobalt-Aluminium, Chrom-Antimon-Titan, Kobalt-Titan, Eisen-Aluminium oder Kobalt-Chrom als Metallkomponente eingesetzt. Weiter können dem Fluorpolymer, insbesondere PTFE, noch insgesamt bis zu 20 Vol.-% andere Polymere, wie z. B. PFA, FEP, ETFE, EPE, PVDF, PA, PI, PEEK, PPS, PPA, zugesetzt werden.

Ähnliche Offenbarungen in Hinblick auf den Einsatz von Mischphasenoxidpigmenten sind auch in der DE 10 2011 077 008 A1 und der DE 10 2013 202 123 B3 zu finden.

Die EP 2 532 905 A1 beschreibt einen Gleitlagerverbundwerkstoff mit einer Stützschicht, insbesondere aus Stahl oder Bronze, optional einer darauf aufgebrachten porösen Gleitschicht, insbesondere aus Bronze, und mit einem Gleitschichtmaterial auf Polymerbasis, insbesondere Fluorpolymerbasis, insbesondere PTFE-Basis, mit die tribologischen Eigenschaften verbessernden Füllstoffen umfassend Thermoplaste und/oder Duroplaste und weitere tribologisch wirksame Stoffe zusammen in compoundierter Form in der Polymerbasis, wobei der Anteil der Thermoplaste und/oder Duroplaste an der compoundierten Form 40 - 95 Vol.-% und der Anteil der weiteren tribologisch wirksamen Stoffe an der compoundierten Form entsprechend 60 - 5 Vol.-% beträgt.

Die GB 2 310 691 A beschreibt ein Gleitlager, das in einem Gehäuse montiert ist, um eine Drehwelle zu stützen. Zur Reduktion von Fretting ist an der Außenfläche des Lagers oder der Innenfläche des Gehäuses eine Überzugsschicht vorgesehen, die aus 3 - 50 Gew.-% Festschmierstoff, 1 bis 50 Gew-% harte Teilchen, und zum Rest aus PAI-Harz besteht. Das Schmiermittel kann PTFE, MoS₂ oder Graphit und die harten Teilchen können ein Oxid, ein Nitrid, ein Carbid oder ein Fluorid umfassen. Als harte Teilchen können u.a. Cr₂O₃-Sb₂O₃-TiO₂ Mischoxide eingesetzt werden.

Aus der EP 2 048 391 A2 ist ein Gleitlager bekannt, dass zur Unterdrückung des Abschälens der Harzschicht zum Zeitpunkt der ersten Inbetriebnahme 3 bis 15 Vol.-% Metalloxidpartikel zur Steuerung der Filmfestigkeit enthält. Als Basisharz wird u.s. ein PAI-Harz oder ein PI-Harz beschrieben.

Der vorliegenden Erfindung liegt die Aufgabe zu Grunde, eine Polymerschicht für ein Gleitlager mit verbesserter Bruchfestigkeit zu schaffen.

Die Aufgabe der Erfindung wird bei dem eingangs genannten Gleitlagerelement dadurch gelöst, dass die Polymerschicht die radial innerste Einlaufschicht oder die nach dem Einlauf mit dem jeweiligen Gleitpartner in Kontakt stehende radial innerste Gleitschicht bildet.

Auf der Suche nach Lösungen zur Verbesserung der Einsetzbarkeit von Polymerschichten in großen Gleitlagern, beispielsweise für LKWs, oder in hoch belasteten Gleitlagern, hat sich überraschend herausgestellt, dass Polymere mit Imidgruppen als eines der wesentlichen Strukturmerkmale, eine nicht vorhersehbare Verbesserung in Hinblick auf den Verschleiß sowie die Verringerung der Ausbruchneigung zeigt, wenn als Metalloxidpartikel ein Bismutvanadat oder ein Chrom-Antimon-Rutil oder eine Mischungen daraus eingesetzt werden. Es wird vermutet, dass dies darauf zurückzuführen ist, dass durch die Reaktivität der Imidgruppen aufgrund der beiden, dem Stickstoffatom benachbarten Sauerstoffatome des die Matrix der Polymerschicht bildenden Polymers, und der damit bewirkten Ladungsverschiebung in der Polymerkette die Einbindung des Bismutvanadats bzw. des Chrom-Antimon-Rutils über deren anionische bzw. kationische Ladungsträger verbessert ist, wodurch die Polymermatrix in einem nicht erwarteten Umfang verstärkt wird. Es ist damit nicht nur die Ausbildung einer Einlaufschicht, wie diese aus dem Stand der Technik bekannt ist, möglich, sondern kann damit die im normalen Betrieb des Gleitlagerelementes nach dem Einlauf mit dem jeweiligen Gleitpartner in Kontakt stehende Gleitschicht an sich aus der Polymerschicht auch für spezielle, hoch belastete Anwendungen eines Gleitlagerelementes hergestellt werden.

Gemäß einer Ausführungsvariante der Gleitlagerelementes ist bevorzugt vorgesehen, dass die Metalloxidpartikel in einem Gesamtanteil in der Polymerschicht enthalten sind, der ausgewählt ist aus einem Bereich von 2 Gew.-% bis 13 Gew.-%. Es hat sich im Zuge der durchgeführten Tests herausgestellt, dass zwar mit einem Anteil von weniger als 2 Gew.-% an diesen Metalloxidpartikeln eine Verbesserung der tribologischen Eigenschaften der Polymerschicht beobachtet werden kann, allerdings kann die Dauerbelastbarkeit der Polymerschicht ab einem Anteil von 2 Gew.-% deutlich verbessert werden, wodurch Polymerschichten mit diesen Mindestanteilen an Metalloxidpartikeln eine bessere Eignung zur Verwendung als Gleitschicht eines Gleitlagers aufweisen. Andererseits nimmt bei einem Anteil von mehr als 13 Gew.-% die Tragfähigkeit der Polymerschicht in einem Ausmaß ab, das die Verwendung der Polymerschicht als Gleitschicht negativ beeinflusst.

Weiter kann vorgesehen sein, dass das Bismutvanadat oxidische Beimengungen von Wolfram und/oder Molybdän enthält. Beide Metalle finden sich auch in typischen Festschmierstoffen, wie MoS₂ oder WS₂, die bekanntermaßen in derartigen Polymerschichten in Gleitlagern eingesetzt werden. Es kann damit nicht nur die Einbindung der Metalloxidpartikel in die Polymermatrix verbessert werden, sondern kann damit auch die Materialverträglichkeit in Hinblick auf die eingesetzten Festschmierstoffpartikel verbessert werden. Darüber hinaus kann damit aber auch die Schmierfähigkeit der Polymerschicht insofern verbessert werden, als aus diesen Beimengungen selbst mit den sulfidischen Bestandteilen des Schmieröls bei den erhöhten Temperaturen im Betrieb des Gleitlagerelementes gegebenenfalls wiederum Festschmierstoffpartikel gebildet werden können.

Gemäß einer weiteren Ausführungsvariante dazu kann vorgesehen sein, dass der Gesamtanteil an Wolframoxid(en) und/oder Molybdänoxid(en) an dem Bismutvanadat ausgewählt ist aus einem Bereich von 5 Gew.-% bis 20 Gew.-%. Bei einem Anteil von weniger als 5 Gew.-% konnte zwar eine gewisse Verbesserung der tribologischen Eigenschaften der Polymerschicht erreicht werden, allerdings in einem Ausmaß, das den Einsatz an Bismutvanadat mit diesen Beimengungen wirtschaftlich nicht rechtfertigen kann. Bei einem Anteil von mehr als 20 Gew.-% konnte keine weitere Verbesserung der tribologischen Eigenschaften der Polymerschicht beobachtet werden.

Der Anteil an Antimonoxid(en) an dem Chrom-Antimon-Rutil ist vorzugsweise ausgewählt aus einem Bereich von 5 Gew.-% bis 14 Gew.-%. Der Einsatz von Antimonoxiden zur Stärkung der Polymermatrix ist aus dem Stand der Technik bekannt. Als Beimengung zum Rutil bewirken die Antimonionen eine Ladungsverzerrung innerhalb der Rutilstruktur, wodurch die Einbindung der Metalloxidpartikel in die Polymermatrix verbessert werden kann. Bei Mengenanteilen an Antimonoxid(en) an dem Chrom-Antimon-Rutil außerhalb des genannten Bereichs konnte entweder nur eine geringfügige Verbesserung der tribologischen Eigenschaften der Polymerschicht im Vergleich zu Polymerschichten mit reinem TiO₂ beobachtet werden (bei geringeren Anteilen), oder die Polymerschicht wurde zu hart (bei höheren Anteilen).

Es kann weiter vorgesehen sein, dass der Anteil an Chromoxid(en) an dem Chrom-Antimon-Rutil ausgewählt ist aus einem Bereich von 1 Gew.-% bis 8 Gew.-%. Der Einsatz von Chromoxiden zur Stärkung der Polymermatrix ist ebenfalls aus dem Stand der Technik bekannt. Als oxidische Beimengung zu Rutil wird aber überraschenderweise eine deutliche Verbesserung dieses Effektes beobachtet, der über jenen hinausgeht, der durch die Zugabe von Chromoxiden allein zu erwarten wäre. Es wird vermutet, dass diese Steigerung des Effektes ebenfalls auf die bessere Einbindung der oxidischen Beimengungen von Chrom in die Polymermatrix zurückgeht, wodurch die Stärkung der Polymermatrix unmittelbarer auf die Polymerketten wirkt. Ebenso wie voranstehend zu Molybdän und Wolfram beschrieben, wird zwar unterhalb von 1 Gew.-% der Effekt der oxidischen Beimengungen an Chrom beobachtet, allerdings in einem Ausmaß, das den Zusatz von reinem Rutil ohne die oxidischen Beimengungen an Chrom favorisiert. Bei einem Anteil von mehr als 8 Gew.-% an diesen Beimengungen wird die Polymermatrix zu hart, worunter die gesamte Tribologie des Gleitlagerelementes leidet.

Vorzugsweise nehmen die Sb5+-Ionen und die Cr2+-Ionen zu mehr als 50 Atom-% des Gesamtanteils an Chrom und Antimon in dem Chrom-Antimon-Rutil die Gitterplätze von Ti3+ ein und ersetzen dieses somit teilweise. Bekanntlich weist die idealisierte Rutilstruktur ausschließlich oktaedrisch koordinierte Titanatome auf. Diese idealisierte Struktur ist gekennzeichnet durch Ti⁴⁺-Ionen und O²⁻Ionen. In der realen Struktur von Rutil kommen aber auch Ti3+ und Ti5+ vor, beispielsweise infolge von Oberflächendefekten. Von Vorteil, dass dabei mehr als 50 Atom-% der Ti3+ Plätze von Chrom und Antimon eingenommen werden, ist, dass an solchen Gitterplätzen offenbar eine verbesserte Anbindung des Chrom-Antimon-Rutils an die Polymerstruktur erfolgen kann.

Es kann weiter vorgesehen sein, dass das Antimon und das Chrom in dem Chrom-Antimon-Rutil in einem Verhältnis zueinander vorliegen, das ausgewählt ist aus einem Bereich von 1,5 : 1 bis 3 : 1. Der genaue Mechanismus der Wirkung ist noch nicht vollständig geklärt. In Versuchen hat sich dieses Mischungsverhältnis jedoch als besonders vorteilhaft gezeigt.

Nach einer anderen Ausführungsvariante des Gleitlagerelementes kann vorgesehen sein, dass ein Anteil von zumindest 60 % der Metalloxidpartikel - bezogen auf den Gesamtanteil der Metalloxidpartikel in der Polymerschicht - eine maximale Partikelgröße von höchstens 500 nm aufweist. Obwohl es möglich ist, die Metalloxidpartikel zur Verstärkung der Polymermatrix mit einer auf dem gegenständlichen technischen Gebiet herkömmlichen Partikelgröße einzusetzen, wurde gefunden, dass der Einsatz von Metalloxidpartikeln mit einer maximalen Partikelgröße von 500 nm den Vorteil hat, dass diese in ihrem Umfeld die Ausrichtung der Polymerketten und dadurch die Struktur des Polymers selbst beeinflussen. Die Metalloxidpartikel weisen also neben ihrer direkten Wirkung zur Verstärkung der Polymermatrix auch eine indirekte Wirkung auf die Struktur des Polymers auf. Dadurch kann die Festigkeit des Polymers gezielt verändert werden.

Es kann weiter vorgesehen werden, dass zumindest ein Teil der Metalloxidpartikel und/oder der Festschmierstoffpartikel eine Oberflächenmodifizierung aufweisen. Durch diese Oberflächenmodifizierung kann die Wechselwirkung der Partikel mit der Polymermatrix, und damit deren Wirkung innerhalb der Polymerschicht, beeinflusst und über weite Bereiche eingestellt werden.

Vorzugsweise ist dabei die Oberflächenmodifizierung ausgewählt aus einer Gruppe umfassend Silanisierungen, Siloxanisierungen, Epoxidierung, Aminierungen, Plasmaaktivierungen, Elektronenstrahl-Aktivierung. Insbesondere die durch diese Reaktionen auf der Oberfläche der Partikel erzeugten funktionellen Gruppen bzw. Liganden haben den Vorteil, dass damit die Partikel einfacher ohne Agglomeratbildung der Ausgangsstoffen zur Herstellung der Polymerschicht beigemischt werden können, wodurch die zumindest annähernd homogene Verteilung der Partikel in der Mischung und damit in der Folge in der Polymerschicht verbessert werden kann. Durch diese zumindest annähernd homogene Verteilung der Partikel kann deren Effekt in der Polymerschicht vergleichmäßigt werden. Zudem kann damit aber auch die Anbindung der Partikel an die Polymermatrix verbessert werden.

Bevorzugt besteht die Polymerschicht gemäß einer Ausführungsvariante des Gleitlagerelementes ausschließlich aus Polyamidimid, Festschmierstoffpartikel und den Metalloxidpartikel, wodurch die Herstellung der Polymerschicht vereinfacht werden kann. Darüber hinaus können gegebenenfalls auftretende Wechselwirkungen der, der Vorstufe des Polymers zugesetzten Inhaltsstoffe der Polymerschicht miteinander reduziert werden, wodurch die Effektivität der Inhaltsstoffe in Richtung auf den zu lagernden Gleitpartner verbessert werden kann.

In Hinblick auf die Stärkung der Polymermatrix hat es sich weiter als vorteilhaft herausgestellt, wenn der Anteil an Festschmierstoffpartikel zum Anteil an Metalloxidpartikel ausgewählt ist aus einem Bereich von 5:1 bis 12:1.

In der bevorzugten Ausführungsvariante der Polymerschicht ist diese als Gleitschicht ausgebildet, sodass also das Lagerelement keine weitere, metallische Gleitschicht benötigt und dieses daher einfacher aufgebaut werden kann.

Zum besseren Verständnis der Erfindung wird diese anhand der nachfolgenden Figur näher erläutert.

Es zeigt in vereinfachter, schematischer Darstellung:

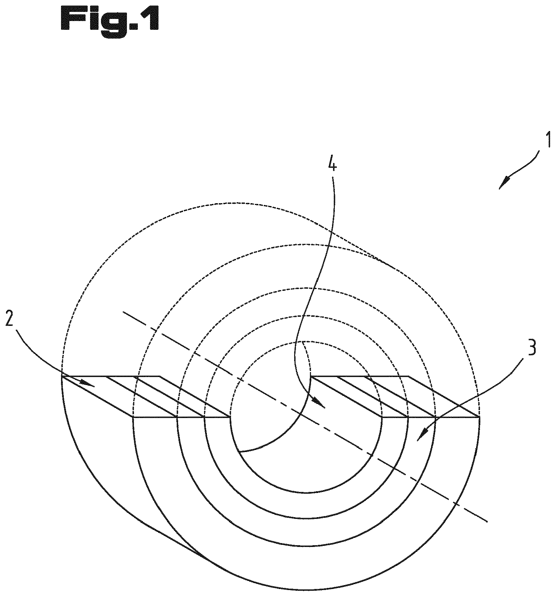

- Fig. 1: ein Gleitlagerelement in Halbeschalenform und in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In Fig. 1 ist eine Ausführungsvariante eines Gleitlagerelementes 1 in Schrägansicht dargestellt. Das Gleitlagerelement 1 ist aus einem Stützkörper 2, einer Lagermetallschicht 3 sowie einer Polymerschicht 4 als Gleitschicht aufgebaut.

Das Gleitlagerelement 1 nach Fig. 1 weist die Form einer Halbschale auf. Diese kann mit einer weiteren Halbschale zur Ausbildung der Gleitlagerung kombiniert werden. Die beiden Halbschalen können gleich oder unterschiedlich aufgebaut sein.

Es besteht aber auch die Möglichkeit, dass das Gleitlagerelement 1 in Form einer Drittelschale, etc. ausgebildet ist. In diesem Fall wird das Gleitlagerelement 1 mit der entsprechenden Anzahl an weiteren Gleitlagerelementen zur Ausbildung der Gleitlagerung kombiniert.

Bevorzugt wird das Gleitlagerelement 1 in der Motorenindustrie eingesetzt.

Der Stützkörper 2 besteht aus einem metallischen Werkstoff, üblicherweise aus Stahl, kann aber auch aus einem Werkstoff bestehen, mit dem dieselbe bzw. eine ähnliche Funktion, nämlich die Bereitstellung der mechanischen Festigkeit des Gleitlagerelementes 1, realisiert werden kann. Beispielsweise können auch verschiedenste Kupferlegierungen, wie z.B. Messing, Bronzen, Verwendung finden. Im Rahmen der Erfindung sind aber auch Direktbeschichtungen von Bauteilen, wie z.B. das Auge einer Pleuelstange, möglich. In diesem Fall wird der Stützkörper 2 durch das jeweilige Bauteil selbst gebildet.

Die Lagermetallschicht 3 ist durch eine Lagermetalllegierung gebildet. Derartige Lagermetalllegierungen sind aus dem Stand der Technik bekannt. Beispielsweise kann die Lagermetalllegierung durch eine Legierung auf Zinn-, Wismut-, Indium-, Blei- oder Aluminiumbasis sowie Legierungen auf, gegebenenfalls hochbleihältiger, CuPb- oder auf AlSn- bzw. auf AlBi-Basis gebildet sein. Es sei dazu auf den einschlägigen Stand der Technik, beispielsweise die voranstehend zitierte EP 1 717 469 A2, verwiesen.

Obwohl in Fig. 1 das Gleitlagerelement 1 als Dreischichtlagerelement dargestellt ist, kann das Gleitlagerelement 1 auch weniger oder mehr als drei Schichten aufweisen. Beispielsweise kann die Polymerschicht 4 direkt auf den Stützkörper 2 aufgebracht sein. Ebenso können übliche Zwischenschichten, wie z.B. zumindest eine Bindeschicht oder zumindest eine Diffusionssperrschicht, bei Bedarf angeordnet sein. Dies zumindest eine Bindeschicht kann zwischen dem Stützkörper 2 und der Lagermetallschicht 3 und/oder zwischen der Lagermetallschicht 3 und der Polymerschicht 4 angeordnet sein. Die zumindest eine Diffusionssperrschicht kann zwischen dem Stützkörper 2 und der Lagermetallschicht 3 und/oder zwischen der Lagermetallschicht 3 und der Polymerschicht 4 angeordnet sein.

Die Polymerschicht 4 weist Festschmierstoffpartikel und Metalloxidpartikel und als Polymer ausschließlich ein Polyimidpolymer oder ein Polyamidimidpolymer auf bzw. besteht vorzugsweise aus diesen Bestandteilen.

Das Polyimidpolymer kann beispielsweise ausgewählt sein aus einer Gruppe umfassend oder bestehend aus Polyimid (PI), Polysuccinimid (PSI), Polybismaleinimid (PBMI), Polybenzimidazol (PBI), Polyoxadiazobenzimidazol (PBO) und Polyimidsulfon (PISO) sowie Mischungen daraus.

Bevorzugt ist das Polymer ein Polyamidimid. Das Polyamidimid kann zumindest teilweise aromatische Gruppen aufweisen, vorzugsweise ist es ein vollaromatischen Polyamidimid.

Der Anteil des Polymers an der Polymerschicht 4 ist bevorzugt ausgewählt aus einem Bereich mit einer unteren Grenze von 30 Gew.-% und einer oberen Grenze von 41 Gew.-%, insbesondere einer unteren Grenze von 33 Gew.-% und einer oberen Grenze von 38 Gew.-%. Besonders bevorzugt beträgt der Anteil des Polymers an der Polymerschicht 35,5 Gew.-%.

Die Festschmierstoffpartikel können ausgewählt sein aus einer Gruppe umfassend oder bestehend aus Graphit, MoS₂, WS₂, Sn, SnS und SnS₂, ZnS, ZnS₂, weiter hexagonales BN, Pb, Pb-Sn-Legierungen, CF₂, PbF₂, etc. Ebenso sind Mischungen aus zwei oder mehreren verschiedenen Festschmierstoffpartikeln einsetzbar. Prinzipiell sind diese Festschmierstoffe bereits aus dem Stand der Technik hinlänglich für diesen Verwendungszweck bekannt.

Der Gesamtanteil der Festschmierstoffpartikel an der Polymerschicht 4 kann ausgewählt sein aus einem Bereich mit einer unteren Grenze von 51,5 Gew.-% und einer oberen Grenze von 62,5 Gew.-%, insbesondere aus einem Bereich mit einer unteren Grenze von 54,5 Gew.-% und einer oberen Grenze von 59,5 Gew.-%. Besonders bevorzugt beträgt der Gesamtanteil der Festschmierstoffpartikel an der Polymerschicht 57 Gew.-%.

In der bevorzugten Ausführungsvariante enthält die Polymerschicht 4 Graphit und MoS₂ als Festschmierstoffpartikel. Der Anteil an Graphit an der Polymerschicht 4 kann dabei ausgewählt sein aus einem Bereich mit einer unteren Grenze von 6 Gew.-% und einer oberen Grenze von 10 Gew.-%, insbesondere aus einem Bereich mit einer unteren Grenze von 7 Gew.-% und einer oberen Grenze von 9 Gew.-%. Besonders bevorzugt beträgt der Anteil von Graphit an der Polymerschicht 8 Gew.-%. Das MoS₂ bildet den Rest des voranstehend genannten Gesamtanteils an Festschmierstoffen an der Polymerschicht 4.

Die Metalloxidpartikel sind ausgewählt aus einer Gruppe umfassend oder bestehend aus Bismutvanadate (BiVO₄), Chrom-Antimon-Rutile und Mischungen daraus. Die Metalloxidpartikel werden also durch Mischoxidpartikel gebildet.

Der Gesamtanteil der Metalloxidpartikel an der Polymerschicht 4 kann ausgewählt sein aus einem Bereich mit einer unteren Grenze von 2 Gew.-% und einer oberen Grenze von 13 Gew.-%, insbesondere aus einem Bereich mit einer unteren Grenze von 5 Gew.-% und einer oberen Grenze von 10 Gew.-%. Besonders bevorzugt beträgt der Anteil der Metalloxidpartikel an der Polymerschicht 7,5 Gew.-%.

Es sein in diesem Zusammenhang darauf hingewiesen, dass selbstverständlich sämtliche Angaben zur Zusammensetzung der Polymerschicht 4 so zu verstehen sind, dass die Summe der Mengenanteile aller Bestandteile der Polymerschicht 100 Gew.-% ergeben muss. Die Polymerschicht 4 kann daher beispielsweise folgende, aus den voranstehend genannten Bereichen ausgewählte Zusammensetzungen aufweisen:

| Polymer [Gew.-%] | Gesamtanteil der Festschmierstoffe [Gew.-%] | Metalloxidpartikel [Gew.-%] |
|---|---|---|
| 30 | 57 | 13 |
| 35,5 | 51,5 | 13 |
| 41 | 51,5 | 7,5 |
| 41 | 57 | 2 |
| 35,5 | 62,5 | 2 |
| 30 | 62,5 | 7,5 |
| 30 | 57 | 13 |
| 33 | 57 | 10 |
| 35,5 | 54,5 | 10 |
| 38 | 54,5 | 7,5 |
| 38 | 57 | 5 |
| 35,5 | 59,5 | 5 |
| 33 | 59,5 | 7,5 |
| 33 | 57 | 10 |

Gemäß einer bevorzugten Ausführungsvariante des Gleitlagerelementes 1 kann das Bismutvanadat oxidische Beimengungen an Wolfram und/oder Molybdän enthalten (Bi(V,W)O₄), Bi(V,Mo)O₄), Bi(V,W,Mo)O₄)). Dabei ist ein Teil des Vanadiums durch Wolfram und/oder durch Molybdän ersetzt, sodass es sich nach wie vor im Mischoxide handelt und nicht um eine Mischung von Oxiden.

Vorzugsweise ist der Gesamtanteil an Wolframoxid(en) und/oder Molybdänoxid(en) an dem Bismutvanadat ausgewählt aus einem Bereich mit einer unteren Grenze von 5 Gew.-% und einer oberen Grenze von 20 Gew.-%, insbesondere aus einem Bereich mit einer unteren Grenze von 7 Gew.-% und einer oberen Grenze von 15 Gew.-%.

Wie in der bevorzugten Ausführungsvariante des Bismutvanadats weist auch der Chrom-Antimon-Rutil Beimengungen auf. Es liegt also auch hier ein Mischphasenoxid und keine Mischung einzelner Oxide vor.

Der Anteil an Antimonoxid(en) an dem Chrom-Antimon-Rutil kann ausgewählt sein aus einem Bereich von 5 Gew.-% bis 14 Gew.-%, insbesondere aus einem Bereich von 8 Gew.-% bis 13 Gew.-%.

Vorzugsweise ist der Anteil an Chromoxid(en) an dem Chrom-Antimon-Rutil ausgewählt aus einem Bereich mit einer unteren Grenze von 1 Gew.-% und einer oberen Grenze von 8 Gew.-%, insbesondere aus einem Bereich mit einer unteren Grenze von 2 Gew.-% und einer oberen Grenze von 7 Gew.-%.

Der Gesamtanteil an Chromoxid(en) und Antimonoxid(en) an dem Chrom-Antimon-Rutil beträgt bevorzugt zwischen 5 Gew.-% und 25 Gew.-%.

Vorzugsweise liegt das Chrom als Cr(II) und das Antimon als Sb(V) in dem Chrom-Antimon-Rutil vor.

Das Chrom und das Antimon ersetzen einen Teil von Titan. Dabei ist bevorzugt, wenn das Antimon und das Chrom zu mehr als 50 Atom-%, vorzugsweise zu mehr als Atom-70 % des Gesamtanteils an Chrom und Antimon in dem Chrom-Antimon-Rutil die Gitterplätze von Ti³⁺-Ionen einnimmt und dieses somit teilweise ersetzt. Vorzugsweise steigt der Gesamtanteil an Chrom und/oder Antimon aber nicht über einen Anteil von Atom-90 %, insbesondere nicht über einen Anteil von Atom-80 %, des Ti3+ Anteils in dem Chrom-Antimon-Rutil.

Ein derartiger Chrom-Antimon-Rutil kann beispielsweise bei der Firma Tomatec bezogen werden.

Es kann weiter vorgesehen sein, dass das Antimon und das Chrom in dem Chrom-Antimon-Rutil in einem Verhältnis zueinander vorliegen, das ausgewählt ist aus einem Bereich von 1,5 : 1 bis 3 : 1, insbesondere aus einem Bereich von 2 : 1 bis 2,5 : 1.

Gemäß einer Ausführungsvariante des Gleitlagerelementes 1 kann vorgesehen sein, dass der Anteil an Festschmierstoffpartikel zum Anteil an Metalloxidpartikel in der Polymerschicht 4 ausgewählt ist aus einem Bereich von 5:1 bis 12:1, insbesondere aus einem Bereich von 5,5 :1 bis 12:1.

Obwohl nicht bevorzugt kann die Polymerschicht 4 weitere Hartpartikel aufweisen, um die Härte der Polymerschicht 4 weiter anpassen zu können. Diese Hartpartikel können ausgewählt sein aus einer Gruppe umfassend oder bestehend aus CrO₃, Fe₃O₄, PbO, ZnO, CdO, Al₂O₃, SiC, Si₃N₄, SiO₂, MnO, Si₃N₄, Ton, Talk, TiO₂, Aluminiumsilikate, wie z.B. Mullit, Magnesiumsilikate, wie z.B. Amosit, Antophyllit, Chrysotil, Carbide, wie z.B. CaC₂, Mo₂C, WC, Metallpartikel, wie z.B. Zn, Ag, Ba, Bronze, Cd, Co, Cu, In, Legierungspartikel von diesen Metallen, AlN, Fe₃P, Metallboride, wie z.B. Fe₂B, Ni₂B, FeB, BaSO₄, chlorinierte Hydrogencarbonate, Fluoride, wie z.B. CaF₂, Metalloxifluoride, Crocidolit, Tremolit, Silizide, Thiophosphate, wie z.B. Zinkthiophosphat.

Es sind auch Mischungen unterschiedlicher Zusatzstoffe bzw. Hartstoffe, beispielsweise von zwei, drei, vier oder mehreren unterschiedlichen Zusatzstoffen bzw. Hartstoffen verwendbar.

Der Anteil an diesen Hartstoffpartikeln kann ausgewählt sein aus einem Bereich mit einer unteren Grenze von 1 Gew.-% und einer oberen Grenze von 10 Gew.-%, insbesondere aus einem Bereich mit einer unteren Grenze von 1 Gew.-% und einer oberen Grenze von 5 Gew.-%, wobei sich durch den Zusatz der Hartstoffpartikel der Anteil an dem Polymer an der Polymerschicht 4 entsprechend verringert.

Die Polymerschicht kann weiter Metallpartikel enthalten, bevorzugt in Form von Plättchen aus weichen Metallen wie Al, Ag, Sn, Zn, Cu oder Mischungen daraus. Der Anteil der Metallpartikel kann ausgewählt sein aus einem Bereich mit einer unteren Grenze von 1 Gew.-% und einer oberen Grenze von 10 Gew.-%, insbesondere aus einem Bereich mit einer unteren Grenze von 1 Gew.-% und einer oberen Grenze von 5 Gew.-%, wobei sich durch den Zusatz der Metallpartikel der Anteil an dem Polymer an der Polymerschicht 4 entsprechend verringert.

Die Festschmierstoffpartikel können eine maximale Partikelgröße von 40 µm aufweisen.

Unter der maximalen Partikelgröße wird dabei jene Abmessung eines Partikels verstanden, die im Vergleich zu anderen Abmessungen desselben Partikels am größten ist. Die maximale Abmessung kann also auch als der Durchmesser jener Hüllkugel verstanden werden, die das jeweilige Partikel gerade vollständig umhüllt.

Insbesondere können die Festschmierstoffpartikel eine Partikelgrößenverteilung (Korngrößenverteilung) von D50 = 4 µm bis 6 µm, gemessen mittels Siebanalyse, aufweisen.

Für den Fall, dass eine Mischung aus MoS₂ und Graphit als Festschmierstoffpartikel eingesetzt wird, weisen die MoS₂-Partikel vorzugsweise eine Korngrößenverteilung mit einem D50-Wert von 4 µm bis 6 µm und die Graphitpartikel vorzugsweise eine Korngrößenverteilung mit einem D50-Wert von 4 µm bis 5,5 µm auf.

Die Metalloxidpartikel weisen bevorzugt zu zumindest 50 %, insbesondere zumindest 90 %, eine maximale Partikelgröße von 500 nm, auf. Vorzugsweise weisen die Metalloxidpartikel nach einer Ausführungsvariante des Gleitlagerelementes 1 zumindest teilweise, insbesondere zur Gänze, eine maximale Partikelgröße von höchstens 200 nm, insbesondere höchstens 100 nm, auf. Insbesondere weisen zumindest 50 %, insbesondere zumindest 90 %, der Metalloxidpartikel eine maximale Partikelgröße auf, die ausgewählt ist aus einem Bereich mit einer unteren Grenze von 1 nm und einer oberen Grenze von 20 nm, vorzugsweise aus einem Bereich mit einer unteren Grenze von 1 nm und einer oberen Grenze von 10 nm.

Mit zumindest teilweise ist dabei gemeint, dass ein Anteil von zumindest 80 % der Metalloxidpartikel eine Partikelgröße von kleiner 200 nm, insbesondere kleiner 100nm, aufweisen.

Die fakultativ vorhandenen Hartpartikel können eine maximale Partikelgröße aufweisen, die ausgewählt ist aus einem Bereich mit einer unteren Grenze von 1 µm und einer oberen Grenze von 10 µm.

Es ist weiter möglich, dass die Metalloxidpartikel und/oder die Festschmierstoffpartikel zumindest teilweise, insbesondere zu Gänze, eine Oberflächenmodifizierung aufweisen. Mit zumindest teilweise ist dabei gemeint, dass ein Anteil von zumindest 20 %, vorzugsweise zumindest 50 %, der gesamt vorhandenen Metalloxidpartikel und/oder ein Anteil von zumindest 20 %, vorzugsweise zumindest 50 %, der gesamt vorhandenen Festschmierstoffpartikel diese Oberflächenmodifizierung aufweisen.

Die Oberflächenmodifizierung ist vorzugsweise ausgewählt ist aus einer Gruppe umfassend Silanisierungen, Siloxanisierungen, Epoxidierung, Aminierungen, Plasmaaktivierungen, Elektronenstrahl-Aktivierung oder ähnlichen Verfahren.

Durch die Oberflächenmodifizierung werden an der Oberfläche der Metalloxidpartikel und/oder der Festschmierstoffpartikel reaktive Liganden bzw. reaktive funktionelle Gruppe erzeugt, die einerseits an die Metalloxidpartikel bzw. die Festschmierstoffpartikel gebunden sind, vorzugsweise kovalent gebunden sind, und die andererseits eine Veränderung der Eigenschaften der Partikel bewirken, indem diese beispielsweise homogener in die Mischung zur Herstellung der Polymerschicht eingemischt werden können oder diese Partikel besser an die Polymerketten des Polymers der Polymerschicht 4 angebunden werden können. Diese Anbindung kann dabei kovalent oder adhäsiv erfolgen.

Die Reaktion der Verbindungen, also insbesondere Silane, Siloxane, Amine, Epoxide bzw. Epoxid bildende Verbindungen, reagieren entweder nach einer Säure/Base-Reaktion mit der Oberfläche der Partikel oder es erfolgt die Anbindung über Dipol-Dipol Wechselwirkungen zwischen diesen Verbindungen und der zu modifizierenden Oberfläche.

Es sei an dieser Stelle darauf hingewiesen, dass unter dem Begriff "Oberflächenmodifizierung" nicht zwangsweise zu verstehen ist, dass die Oberfläche der Partikel zu hundert Prozent modifiziert wird.

Beispiele für derartige Verbindungen sind primäre, sekundäre, tertiäre oder quaternäre organische Amine mit bis zu 15 Kohlenstoffatomen, beispielsweise Methyl-, Ethyl, n- und i-Propyl und Butylamine, Ethylendiamin, Diethylentriamin, Silane, insbesondere Organoalkoxysilane.

In der bevorzugten Ausführungsvariante des Gleitlagerelementes 1 bildet die Polymerschicht 4 die Gleitschicht, also jene radial innerste Schicht, die mit dem Gleitpartner, z.B. einer Welle, auch nach dem Einlauf des Gleitlagerelementes 1 in Verbindung steht. Die Gleitschicht kann eine Schichtdicke zwischen 5 µm und 25 µm, insbesondere eine Schichtdicke zwischen 10 µm und 20 µm, aufweisen.

Es ist aber auch möglich, dass die Polymerschicht 4 lediglich eine Einlaufschicht bildet, die, insbesondere direkt, auf einer darunter im Gleitlagerelement 1 situierten metallischen Gleitschicht angeordnet ist, wenn die darunterliegende metallische Laufschicht eine Härte von mehr als 110 HV aufweist.

Zur Herstellung der Polymerschicht 4 wird aus den einzelnen Komponenten, also einer Vorstufe des Polymers, den Festschmierstoffpartikeln, den Metalloxidpartikeln und gegebenenfalls den Hartstoffpartikeln, mit einem Dispersionsmittel, insbesondere einem organischen Lösungsmittel, wie z.B. Xylol, N- Methylpyrrolidon, ein Alkohol, oder aber auch Wasser eine Dispersion nach üblichen Verfahren hergestellt. Diese Dispersion wird dann auf die zu beschichtende metallische Oberfläche mit in der Lacktechnik üblichen Verfahren aufgetragen, also beispielsweis aufgesprüht, aufgestrichen oder aufgetaucht. Der Anteil des Dispersionsmittels an der Dispersion richtet sich dabei, nach der angewandten Technik, insbesondere nach der Viskosität, die die Dispersion haben soll. Nach dem Aufbringen der Dispersion wird die Vorstufe des Polymers polymerisiert, wodurch die Dispersion aushärtet. Die Härtung kann an Luft bei Raumtemperatur oder bei erhöhter Temperatur bis 280 °C erfolgen. Bevorzugt wird durch Oberflächenverfahren, wie Infrarotstrahlen oder Induktionsheizen, lediglich die Beschichtung erwärmt, ohne das gesamte Gleitlagerelement 1 einer hohen Temperatur auszusetzen.

Zur Evaluierung der Polymerschicht 4 wurden die in Tabelle 1 angegebenen Beispielzusammensetzungen angefertigt. Die Zahlenangaben sind in Gew.-% zu verstehen. Die Abkürzung PAI steht für Polyamidimid. Die Abkürzung CAR steht für Chrom-Antimon-Rutil. Die Abkürzung BV steht für Bismutvanadat: Es sei aber bereits jetzt darauf hingewiesen, dass Polymerschichten 4 mit einem der anderen voranstehend genannten Polymere vergleichbare Ergebnisse lieferten.

**Tabelle 1: Beispielzusammensetzungen**

| Nr. | Polymer | Festschmierstoff(e) | Metalloxid(e) | Verschleiß [µm] |
|---|---|---|---|---|
| 1 | 30 | 57 | CAR: 13 | 6 |
| 2 | 35,5 | 51,5 | CAR: 13 | 6 |
| 3 | 41 | 51,5 | CAR: 7,5 | 7 |
| 4 | 41 | 57 | CAR: 2 | 8 |
| 5 | 35,5 | 62,5 | CAR: 2 | 8 |
| 6 | 30 | 62,5 | CAR: 7,5 | 7 |
| 7 | 30 | 57 | CAR: 13 | 6 |
| 8 | 33 | 57 | CAR: 10 | 5 |
| 9 | 35,5 | 54,5 | CAR: 10 | 5 |
| 10 | 38 | 54,5 | CAR: 7,5 | 6 |
| 11 | 38 | 57 | CAR: 5 | 6 |
| 12 | 35,5 | 59,5 | CAR: 5 | 6 |
| 13 | 33 | 59,5 | CAR: 7,5 | 6 |
| 14 | 33 | 57 | CAR: 10 | 5 |
| 15 | PAI: 38 | MoS₂: 51 | CAR: 5 | 7 |
| | | Graphit: 6 | | |
| 16 | PAI: 33 | MoS₂: 47 | CAR: 10 | 6 |
| | | Graphit: 10 | | |
| 17 | PAI: 35,5 | MoS₂: 49 | CAR: 7,5 | 5 |
| | | Graphit: 8 | | |
| 18 | PAI: 28 | MoS₂: 51 | CAR: 15 | 12 ⁽¹⁾ |
| | | Graphit: 6 | | |
| 19 | PAI: 42 | MoS₂: 51 | CAR: 1 | 10 |
| | | Graphit: 6 | | |
| 20 | PAI: 38 | MoS₂: 44 | CAR: 12 | 16 ⁽²⁾ |
| | | Graphit: 6 | | |
| 21 | PAI: 35,5 | MoS₂: 49 | reines TiO₂: 7,5 | 9 |
| | | Graphit: 8 | | |
| 22 | PTFE: 35,5 | MoS₂: 49 | CAR: 7,5 | 16 ⁽³⁾ |
| | | Graphit: 8 | | |
| 23 | PAI: 35,5 | WS₂: 57 | CAR: 7,5 | 8 |
| 24 | PAI: 37 | SnS₂: 54 | CAR: 9 | 8 |
| 25 | PAI: 36 | h-BN: 59 | CAR: 5 | 8 |
| 26 | PAI: 34 | ZnS₂: 61 | CAR: 5 | 7 |
| 27 | PAI: 38 | MoS₂: 51 | BV: 5 | 8 |
| | | Graphit: 6 | | |
| 28 | PAI: 33 | MoS₂: 47 | BV: 10 | 8 |
| | | Graphit: 10 | | |
| 29 | PAI: 35,5 | MoS₂: 49 | BV: 7,5 | 8 |
| | | Graphit: 8 | | |
| 30 | PAI: 35,5 | MoS₂: 49 | BV: 7,5 (Anteil an Wolframoxiden 5 Gew.-%) | 7 |
| | | Graphit: 8 | | |
| 31 | PAI: 35,5 | MoS₂: 49 | BV: 7,5 (Anteil an Wolframoxiden 20 Gew.-%) | 6 |
| | | Graphit: 8 | | |
| 32 | PAI: 35,5 | MoS₂: 49 | BV: 7,5 (Anteil an Wolframoxiden 2 Gew.-%) | 9 |
| | | Graphit: 8 | | |
| 33 | PAI: 35,5 | MoS₂: 49 | BV: 7,5 (Anteil an Wolframoxiden 25 Gew.-%) | 12 |
| | | Graphit: 8 | | |
| 34 | PAI: 35,5 | MoS₂: 49 | BV: 7,5 (Anteil an Molybdänoxiden 5 Gew.-%) | 4 |
| | | Graphit: 8 | | |
| 35 | PAI: 35,5 | MoS₂: 49 | BV: 7,5 (Anteil an Molybdänoxiden 20 Gew.-%) | 4 |
| | | Graphit: 8 | | |
| 36 | PAI: 35,5 | MoS₂: 49 | BV: 7,5 (Anteil an Molybdänoxiden 2 Gew.-%) | 8 |
| | | Graphit: 8 | | |
| 37 | PAI: 35,5 | MoS₂: 49 | BV: 7,5 (Anteil an Molybdänoxiden 25 Gew.-%) | 8 |
| | | Graphit: 8 | | |
| 38 | PAI: 35,5 | MoS₂: 49 | CAR: 7,5 (Anteil an Chromoxiden 1 Gew.-%) | 5 |
| | | Graphit: 8 | | |
| 39 | PAI: 35,5 | MoS₂: 49 | CAR: 7,5 (Anteil an Chromoxiden 8 Gew.-%) | 5 |
| | | Graphit: 8 | | |
| 40 | PAI: 35,5 | MoS₂: 49 | CAR: 7,5 (Anteil an Chromoxiden 0,2 Gew.-%) | 7 |
| | | Graphit: 8 | | |
| 41 | PAI: 35,5 | MoS₂: 49 | CAR: 7,5 (Anteil an Chromoxiden 10 Gew.-%) | 7 |
| | | Graphit: 8 | | |
| 42 | PAI: 35,5 | MoS₂: 49 | CAR: 7,5 (Anteil an Antimonoxiden 5 Gew.-%) | 5 |
| | | Graphit: 8 | | |
| 43 | PAI: 35,5 | MoS₂: 49 | CAR: 7,5 (Anteil an Antimonoxiden 14 Gew.-%) | 6 |
| | | Graphit: 8 | | |
| 44 | PAI: 35,5 | MoS₂: 49 | CAR: 7,5 (Anteil an Antimonoxiden 2 Gew.-%) | 7 |
| | | Graphit: 8 | | |
| 45 | PAI: 35,5 | MoS₂: 49 | CAR: 7,5 (Anteil an Antimonoxiden 16 Gew.-%) | 7 |
| | | Graphit: 8 | | |
| 46 | PAI: 35,5 | MoS₂: 49 | CAR: 7,5 (Anteil an Chrom- und Antimonoxiden 15 Gew.-%; Cr und Sb ersetzen 55 Atom-% Ti3+) | 5 |
| | | Graphit: 8 | | |
| 47 | PAI: 35,5 | MoS₂: 49 | CAR: 7,5 (Anteil an Chrom- und Antimonoxiden 15 Gew.-%; Cr und Sb ersetzen 45 Atom-% Ti3+) | 7 |
| | | Graphit: 8 | | |
| 48 | PAI: 35,5 | MoS₂: 49 | CAR: 7,5 (Anteil an Chromoxiden 6 Gew.-%, Anteil an Antimonoxiden 12 Gew.-%) | 5 |
| | | Graphit: 8 | | |
| 49 | PAI: 35,5 | MoS₂: 49 | CAR: 7,5 (50 % der Partikel weisen eine Partikelgröße von kleiner 500 nm auf) | 6 |
| | | Graphit: 8 | | |
| 50 | PAI: 35,5 | MoS₂: 49 | CAR: 7,5 (50 % der Partikel weisen eine Partikelgröße von kleiner 200 nm auf) | 5 |
| | | Graphit: 8 | | |
| 51 | PAI: 35,5 | MoS₂: 49 | CAR: 10 (Partikel weisen eine Partikelgröße zwischen 2 nm und 10 nm auf) | 4 |
| | | Graphit: 8 | | |
| 52 | PAI: 35,5 | MoS₂: 49 | CAR: 7,5 (40 % der Partikel weisen eine Partikelgröße von kleiner 500 nm auf) | 8 |
| | | Graphit: 8 | | |
| 53 | PAI: 35,5 | MoS₂: 49 | CAR: 7,5 (oberflächenmodifiziert mit Siloxan) | 4 |
| | | Graphit: 8 | | |
| 54 | PAI: 35,5 | MoS₂: 49 | CAR: 7,5 (oberflächenmodifiziert durch PlasmaAktivierung) | 5 |
| | | Graphit: 8 | | |
| 55 | PAI: 35,5 | MoS₂: 49 | CAR: 7,5 (oberflächenmodifiziert durch Elektronenstrahl-Aktivierung) | 5 |
| | | Graphit: 8 | | |

| | | | | |
|---|---|---|---|---|
| ⁽¹⁾... Die Schicht zeigt stellenweise Dauerbrüche ⁽²⁾... Die Schicht zeigt großflächige Dauerbrüche ⁽³⁾... Die Schicht ist teilweise bis zum Untergrund verschlissen | | | | |

Die Beispiele 4 bis 8, 18, 19, 22, 23, 27, 31, 33 und 38 in Tabelle 1 sind Vergleichsbeispiele.

Es wurden damit Gleitlagerelemente 1 mit einem Stahlrücken als Stützkörper, einer CuSn5Zn-Legierung als Lagermetallschicht 3 und der aus den Beispielzusammensetzungen gemäß Tabelle 1 jeweils direkt darauf hergestellten Polymerschicht 4 in Form von Flachproben hergestellt. Die Polymerschicht 4 wurde entsprechend voranstehenden Ausführungen hergestellt. An diesen Mustern wurden folgende Tests durchgeführt.

Auf einem Rotationstribometer in Ring-on-Disc Konfiguration mit zusätzlichen Ölnuten im Gegenkörper wurden die Proben bei einer Geschwindigkeit von 2,5 m/s schrittweise mit 2 MPa, 4 MPa und 6 MPa für jeweils 3,5 Stunden bei einer Temperatur von 40°C mit Tauchölschmierung getestet. Im Anschluss wurde der Verschleiß der Polymerschicht durch mechanische Messung ermittelt.

Die daraus gewonnenen Ergebnisse sind auf ganze Micrometer gerundet in Tabelle 1 zusammengefasst.

Der Ordnung halber sei abschließend darauf hingewiesen, dass zum besseren Verständnis des Aufbaus des Gleitlagerelementes 1 dieses bzw. dessen Bestandteile teilweise unmaßstäblich und/oder vergrößert und/oder verkleinert dargestellt wurden.

### Bezugszeichenaufstellung

- 1: Gleitlagerelement
- 2: Stützkörper
- 3: Lagermetallschicht
- 4: Polymerschicht

## Patentansprüche

1. Gleitlagerelement (1) in Form eine Halbschale oder eine Drittelschale umfassend einen Stützkörper (2) und eine Polymerschicht (4), wobei die Polymerschicht (4) Festschmierstoffpartikel und Metalloxidpartikel und als Polymer ausschließlich ein Polyimidpolymer oder ein Polyamidimidpolymer oder eine Mischung daraus aufweist, und die Metalloxidpartikel ausgewählt sind aus einer Gruppe umfassend Bismutvanadate, Chrom-Antimon-Rutile und Mischungen daraus, **dadurch gekennzeichnet, dass** die Polymerschicht (4) die radial innerste Einlaufschicht oder die nach dem Einlauf mit dem jeweiligen Gleitpartner in Kontakt stehende radial innerste Gleitschicht bildet.

2. Gleitlagerelement (1) nach Anspruch 1, **dadurch gekennzeichnet, dass** die Metalloxidpartikel in einem Anteil in der Polymerschicht (4) enthalten sind, der ausgewählt ist aus einem Bereich von 2 Gew.-% bis 13 Gew.-%.

3. Gleitlagerelement (1) nach Anspruch 1 oder 2, **dadurch gekennzeichnet, dass** das Bismutvanadat oxidische Beimengungen von Wolfram und/oder Molybdän enthält.

4. Gleitlagerelement (1) nach Anspruch 3, **dadurch gekennzeichnet, dass** der Gesamtanteil an Wolframoxid(en) und/oder Molybdänoxid(en) an dem Bismutvanadat ausgewählt ist aus einem Bereich von 5 Gew.-% bis 20 Gew.-%.

5. Gleitlagerelement (1) nach einem der Ansprüche 1 bis 4, **dadurch gekennzeichnet, dass** der Anteil an Antimonoxid(en) an dem Chrom-Antimon-Rutil ausgewählt ist aus einem Bereich von 5 Gew.-% bis 14 Gew.-%.

6. Gleitlagerelement (1) nach einem der Ansprüche 1 bis 5, **dadurch gekennzeichnet, dass** der Anteil an Chromoxid(en) an dem Chrom-Antimon-Rutil ausgewählt ist aus einem Bereich von 1 Gew.-% bis 8 Gew.-%.

7. Gleitlagerelement nach einem der Ansprüche 1 bis 6, **dadurch gekennzeichnet, dass** das Kristallgitter des Chrom-Antimon-Rutils Ti³⁺- und Ti⁵⁺-Ionen aufweist, wobei das Antimon und das Chrom zu mehr als 50 Atom-% des Gesamtanteils an Chrom und Antimon in dem Chrom-Antimon-Rutil die Gitterplätze von Ti³⁺-Ionen einnimmt und dieses somit teilweise ersetzt.

8. Gleitlagerelement nach einem der Ansprüche 1 bis 7, **dadurch gekennzeichnet, dass** das Antimon und das Chrom in dem Chrom-Antimon-Rutil in einem Verhältnis zueinander vorliegen, das ausgewählt ist aus einem Bereich von 1,5 : 1 bis 3 : 1.

9. Gleitlagerelement (1) nach einem der Ansprüche 1 bis 8, **dadurch gekennzeichnet, dass** ein Anteil von zumindest 50 % der Metalloxidpartikel eine maximale Partikelgröße von höchstens 500 nm aufweist.

10. Gleitlagerelement (1) nach einem der Ansprüche 1 bis 9, **dadurch gekennzeichnet, dass** zumindest ein Teil der Metalloxidpartikel und/oder der Festschmierstoffpartikel eine Oberflächenmodifizierung aufweisen.

11. Gleitlagerelement (1) nach Anspruch 10, **dadurch gekennzeichnet, dass** die Oberflächenmodifizierung ausgewählt ist aus einer Gruppe umfassend Silanisierungen, Siloxanisierungen, Epoxidierung, Aminierungen, Plasmaaktivierungen, Elektronenstrahl-Aktivierung.

12. Gleitlagerelement (1) nach einem der Ansprüche 1 bis 11, **dadurch gekennzeichnet, dass** die Polymerschicht (4) ausschließlich aus Polyamidimid, Festschmierstoffpartikel und den Metalloxidpartikel besteht.

13. Gleitlagerelement (1) nach einem der Ansprüche 1 bis 12, **dadurch gekennzeichnet, dass** der Anteil an Festschmierstoffpartikel zum Anteil an Metalloxidpartikel ausgewählt ist aus einem Bereich von 5:1 bis 12:1.

## Claims

1. A sliding bearing element (1) in the form of a half shell or a third of a shell comprising a support body (2) and a polymer layer (4), wherein the polymer layer (4) comprises solid lubricant particles and metal oxide particles and as a polymer exclusively a polyimide polymer or a polyamide-imide polymer or a mixture thereof, and wherein the metal oxide particles are selected from a group comprising bismuth vanadate, chromium-antimony-rutile and mixtures thereof, **characterized in that** the polymer layer (4) forms the radially innermost running-in layer or the radially innermost sliding layer in contact with the respective sliding partner after the running-in.

2. The sliding bearing element (1) as claimed in claim 1, **characterized in that** the metal oxide particles are included in a proportion, which is selected from a range of 2 wt.% to 13 wt.%, in the polymer layer (4).

3. The sliding bearing element (1) as claimed in claim 1 or 2, wherein the bismuth vanadate contains oxidic admixtures of tungsten and/or molybdenum.

4. The sliding bearing element (1) as claimed in claim 3, **characterized in that** the total amount of tungsten oxide(s) and/or molybdenum oxide(s) on the bismuth vanadate is selected from a range of 5 wt.% to 20 wt.%.

5. The sliding bearing element (1) as claimed in any of claims 1 to 4, **characterized in that** the proportion of antimony oxide(s) to chromium-antimony-rutile is selected from a range of 5 wt.% to 14 wt.%.

6. The sliding bearing element (1) as claimed in any of claims 1 to 5, **characterized in that** the proportion of chromium oxide(s) in the chromium-antimony-rutile is selected from a range of 1 wt.% to 8 wt.%.

7. The sliding bearing element as claimed in any of claims 1 to 6, **characterized in that** the crystal lattice of the chromium-antimony-rutile comprises Ti³⁺ and Ti⁵⁺ ions, wherein the antimony and the chromium at more than 50 atom % of the total amount of chromium and antimony in the chromium-antimony-rutile occupies the lattice sites of Ti³⁺ ions and thus partly replaces the Ti³⁺ ions.

8. The sliding bearing element as claimed in any of claims 1 to 7, **characterized in that** the antimony and the chromium in the chromium-antimony-rutile are in a ratio relative to one another selected from a range of 1.5:1 to 3:1.

9. The sliding bearing element (1) as claimed in any of claims 1 to 8, **characterized in that** a proportion of at least 50 % of the metal oxide particles has a maximum particle size of at most 500 nm.

10. The sliding bearing element (1) as claimed in any of claims 1 to 9, **characterized in that** at least a portion of the metal oxide particles and/or the solid lubricant particles have a surface modification.

11. The sliding bearing element (1) as claimed in claim 10, **characterized in that** the surface modification is selected from a group comprising silanization, siloxation, epoxidation, amination, plasma activation, electron beam activation.

12. The sliding bearing element (1) as claimed in any of claims 1 to 11, **characterized in that** the polymer layer (4) consists exclusively of polyamide-imide, solid lubricant particles and the metal oxide particles.

13. The sliding bearing element (1) as claimed in any of claims 1 to 12, **characterized in that** the proportion of solid lubricant particles to the proportion of metal oxide particles is selected from a range of 5:1 to 12:1.

## Revendications

1. Elément de palier lisse (1) sous forme d'une demi-coque ou d'un tiers de coque, comprenant un corps d'appui (2) et une couche polymère (4), la couche polymère (4) comportant des particules de lubrifiant solide et des particules d'un oxyde métallique et, en tant que polymère, exclusivement un polymère polyimide ou un polymère polyamide-imide, ou un mélange de ceux-ci, et les particules d'oxyde métallique étant choisies dans un groupe comprenant les vanadates de bismuth, les chrome-antimoine-rutiles et les mélanges de ceux-ci, **caractérisé en ce que** la couche polymère (4) forme la couche pénétrante radialement la plus à l'intérieur ou la couche de glissement radialement la plus à l'intérieur se trouvant, après pénétration, en contact avec la couche de glissement correspondante.

2. Elément de palier lisse (1) selon la revendication 1, **caractérisé en ce que** les particules d'oxyde métallique sont présentes dans la couche polymère (4) selon une proportion qui est choisie dans la plage de 2 % en poids à 13 % en poids.

3. Elément de palier lisse (1) selon la revendication 1 ou 2, **caractérisé en ce que** le vanadate de bismuth contient des impuretés sous forme d'oxydes de tungstène et/ou de molybdène.

4. Elément de palier lisse (1) selon la revendication 3, **caractérisé en ce que** la proportion totale du ou des oxydes de tungstène et/ou du ou des oxydes de molybdène dans le vanadate de bismuth est choisie dans la plage de 5 % en poids à 20 % en poids.

5. Elément de palier lisse (1) selon l'une des revendications 1 à 4, **caractérisé en ce que** la proportion du ou des oxydes d'antimoine dans le chrome-antimoine-rutile et choisie dans la plage de 5 % en poids à 14 % en poids.

6. Elément de palier lisse (1) selon l'une des revendications 1 à 5, **caractérisé en ce que** la proportion du ou des oxydes de chrome dans le chrome-antimoine-rutile est choisie dans la plage de 1 % en poids à 8 % en poids.

7. Elément de palier lisse selon l'une des revendications 1 à 6, **caractérisé en ce que** le réseau cristallin du chrome-antimoine-rutile présente des ions Ti³⁺ et Ti⁵⁺, l'antimoine et le chrome occupant les sites réticulaires des ions Ti³⁺ à raison de plus de 50 % en poids en atomes par rapport à la quantité totale de chrome et d'antimoine dans le chrome-antimoine-rutile et ainsi le remplaçant partiellement.

8. Elément de palier lisse selon l'une des revendications 1 à 7, **caractérisé en ce que** l'antimoine et le chrome sont présents dans le chrome-antimoine-rutile selon un rapport de l'un à l'autre qui est choisi dans la plage de 1,5:1 à 3:1.

9. Elément de palier lisse (1) selon l'une des revendications 1 à 8, **caractérisé en ce qu'**une proportion d'au moins 50 % des particules d'oxyde métallique présentent une granulométrie maximale d'au plus 500 nm.

10. Elément de palier lisse (1) selon l'une des revendications 1 à 9, **caractérisé en ce qu'**au moins une partie des particules d'oxyde métallique et/ou des particules de lubrifiant solide présentent une modification en surface.

11. Elément de palier lisse (1) selon la revendication 10, **caractérisé en ce que** la modification en surface est choisie dans le groupe comprenant les silanisations, les siloxanisations, l'époxydation, les aminations, les activations par plasma, l'activation par faisceau d'électrons.

12. Elément de palier lisse (1) selon l'une des revendications 1 à 11, **caractérisé en ce que** la couche polymère (4) est constituée exclusivement de polyamide-imide, de particules de lubrifiant solide et des particules d'oxyde métallique.

13. Elément de palier lisse (1) selon l'une des revendications 1 à 12, **caractérisé en ce que** la proportion des particules de lubrifiant solide, rapportée aux particules d'oxyde métallique, est choisie dans la plage de 5:1 à 12:1.
